# EUROPEAN PATENT SPECIFICATION

(11) **EP 3 467 478 B1**
(45) Date of publication and mention of the grant of the patent: **10.06.2020**
(21) Application number: 18198458.4
(22) Date of filing: 03.10.2018
(51) Int. Cl.: G01N 21/47, G01J 3/02, G01J 3/10, G01N 21/359, G01N 21/64, G01N 21/65

(54) **AN INTEGRATED OPTICAL SYSTEM FOR THE EXAMINATION OF SAMPLE MATERIALS**
INTEGRIERTES OPTISCHES SYSTEM ZUR UNTERSUCHUNG VON PROBENMATERIALIEN
SYSTÈME OPTIQUE INTÉGRÉ POUR L'EXAMEN DE MATÉRIAUX D'ÉCHANTILLONS

(30) Priority: 04.10.2017 GB 201716193
(43) Date of publication of application: 10.04.2019
(73) Proprietor: Iris Technology Solutions SL, 08860 Castelldefels (ES)
(72) Inventor: Rosales, Alejandro, 43880 Coma-ruga (ES); Kehoe, Timothy, Dublin 12 (IE); Garrick, Meabh, Dublin 4 (IE)
(74) Representative: Ponti & Partners, S.L.P

(56) References cited:
- WO-A1-01/67073
- US-A- 4 022 534
- US-B1- 7 671 985

## Description

The present invention relates to an optical system capable of examining a sample material. More in particular, the present invention relates to a compact optical system which combines a light delivery system and a light collection system along a common axis that can be used to examine sample materials at a range of sample working distances and sample material surface shapes.

### Background to the Invention

Optical monitoring techniques require as a basis that light of known properties needs to be delivered to and collected from a sample. If the properties of the light are known, such as intensity, spectral signature or polarisation, before delivery to the sample, and if some portion of the light interacts with the sample, and is collected whether by reflection, transmission or fluorescence, so that it can be analysed, then the changes in the properties of the light can provide information about the nature of the sample. These changes in the light's properties are due to its interaction with the sample, and so by the appropriate analysis of the light and modelling of the interaction of light and matter, useful information about the sample's physical and chemical properties can be discovered, such as its material composition, its dimensions and its internal and external structure.

Many techniques exist to study matter by optical interactions, including absorption, fluorescence and Raman spectroscopy, ellipsometry, interferometry, and reflectometry. What is common to all techniques is the requirement to efficiently deliver light of known properties, in a defined illumination field, to the sample, such that the interaction of the light with the sample is maximised and the resulting reflected or transmitted light from the sample is collected with optimum efficiency. Instruments of multiple types have been designed for this purpose, over many decades.

In general, when it is desired to study the chemical properties of a sample, it is beneficial to collect light that has at least partially diffused through the sample, such as diffusely reflected, transmitted or emitted light (fluorescence), rather than light that has reflected directly from the surface or optical interfaces of the sample, such as specularly reflected light.

For instrument makers, especially in the development of instruments for use in mobile or handheld applications or inline applications on existing processing lines e.g. food processing lines that have some limitations in terms of available space, it is beneficial to reduce the size of the device as much as possible, and to operate the complete device from a single location and face of the sample. For this reason, a compact reflection configuration is the most favoured. The main challenge is to combine the most efficient light delivery and light collection optics in the same region of space while preventing specularly reflected light from the light delivery optics being directly collected, without any sample interaction. Therefore, ensuring that the collected signal is composed mainly of light that has interacted with the sample material.

It is also important for instrument makers to ensure that the optical instruments deliver light to the sample in an illumination field that provides sufficient light to the sample to produce an accurate measurement of the parameters of interest, with a strong signal to noise ratio. In the case of inline measurements e.g. in a food processing inline system, where the sample material position and orientation can change due to conveyance or transport systems, and in the case of sample materials that have a wide range of surface shapes and bulk composition, such as food products, natural minerals, and recycling materials, it is beneficial to provide an illumination field that has a high degree of consistency over a large area and range of working distances.

US 6,760,613 describes an optical system for the examination of a sample. The system uses a substantially monostatic, substantially confocal optical system comprising transmitting optics that focus an illuminating light upon the sample and receiving optics that collect light reflected from the sample following illumination. However, a disadvantage of the system presented in US 6,760,613 is the complex fabrication of a collection lens with a central opening for housing the delivery optics. The lens is a specialised optical element that requires a complex and costly manufacturing process. Furthermore, a disadvantage of this system is the efficiency of transferring the light collected over a large numerical aperture to spectrometer input optics, which are typically of a low Numerical Aperture (NA) and narrow spatial aperture. Another limitation is that the system has a narrowly defined working distance provided by the common focus of the light delivery and collection lenses.

Another system which has been designed for the delivery and collection of light from a test sample by means of a fibre optic probe is described in WO 2014/121389. The probe comprises a first and a second optical system, a delivery light guide comprising at least one optical fibre for transmitting excitation radiation from a radiation source disposed at a proximal end of the light guide to the first optical system. However, the probe described in WO 2014/121389, similarly to the system of US 6,760,613, requires the fabrication of a collection lens with a central opening for housing the delivery optics, which requires a specialised and highly complex process. Furthermore, the probe of WO 2014/121389 is designed to illuminate the test sample over a narrow range of angles, which limits the interaction of the light with the volume of the sample material. The system has a narrowly defined working distance provided by the focal plane of the collection lens.

US 7,671,985 discloses an analysis system which uses an ellipsoidal reflector to deliver light to a small spot. This design has high efficiency in light delivery and illuminates over a wide range of angles, thanks to the large numerical aperture of the ellipsoid. The light source is situated at the first focus of the ellipsoid, and the light reflected from the surface of the ellipsoid is recombined at the second focus. Light that is diffusely reflected or emitted from the sample is redirected by a second reflector to the input face of an optical fibre, by which it is delivered to a spectrometer for analysis. The second reflector which collects the diffusely reflected or emitted light is situated along the optical axis of the ellipsoidal reflector. This is a novel way to combine coaxially the light delivery and collection optics, similar in principle to the two previously mentioned designs, but without the fabrication challenge of cutting apertures in lenses. Since the light collecting reflector is situated along the optical axis of the light delivery reflector, a certain amount of light from the source is blocked. However, the light rays reflected from other parts of the ellipsoidal reflector surface combine to make a bright spot at the second focus of the ellipsoid, which is the sampling spot. However, at distances greater than or less than the focal distance, the shadow from the collection optics is present in the illumination light beam. The collection optics consist of an ellipsoidal mirror, and are designed so that the first focus of the collection optics is also at the sampling spot, while their second focus is at the input facet of the optical fibre. This system is able to generate a very tightly defined sampling spot, at a fixed focal distance, so that samples may be analysed with a spatial resolution of less than 1 mm. This type of system is suitable for localised analysis, especially to test within locally uniform regions of a sample with heterogeneous composition. However, if it is desired to make a measurement that is representative of a whole heterogeneous sample, or extended region of a sample, then it is necessary to make many measurements from different locations and form a statistical average, which requires a lengthy measurement process unsuitable to many applications e.g. inline analysis. A further limitation of the disclosed system is that the surface of the sample under test is required to be positioned at the focal distance, which is the common focal distance of the two ellipsoidal reflectors - for effective light delivery and collection. If the sample surface is not at the focal distance, then the illumination field has a dark region at its centre due to the obstruction of the collection optical system, leading to a less accurate analysis of the sample material.

Another optical system is disclosed, in EP1269153, whereby the light delivery and collection optics are combined by placing a fibre optic collimator lens in front of a parabolic reflector. This is similar to the design disclosed in US 7,671,985, in that a large Numerical Aperture (NA) reflector is used for delivery of the light source to the sample. The light from the reflector is partially blocked by the collection optics, which is a fibre optic collimator, positioned in front of it along a common optical axis. In the case of this design, the reflector produces a collimated beam, so that the shadow from the collection optics is present in the beam at all distances, including on the sample surface, so that the illuminated field is annular. This is not an advantageous illumination pattern for most optical monitoring techniques because the location from which the signal is collected is not directly illuminated, and the resulting collected signal has a low intensity. However, this is advantageous for certain applications such as interactance NIR spectroscopy, which requires that the illuminated region (annular) is separated from the light collection region, being the circle within the annulus. This arrangement ensures that light collected for analysis has been diffused through the bulk of the sample, rather than reflected from its surface region. It is particularly useful in assessing material underneath a layer of packaging, or natural skin, such as is found on fruit, which is the intended application of this invention.

### Summary of the invention

It is an aim of the present invention to provide an optical system that overcomes the disadvantages of the prior art solution by integrating a light delivery system and a light collection system along a common axis, while preventing specularly reflected light, which has been reflected from the sample surface without any sample interaction, from being collected.
It is another aim of the present invention to provide an optical system capable of delivering light to a sample material over a large range of angles, so as to increase the interaction of the light with the material, with the light collection system being capable of maximizing the collection of diffusely reflected or emitted light from the sample material.
It is a further aim of the present invention to provide an optical system with a field of illumination which is broad, has a substantially uniform circular shape, and is continuous over a range of working distances, to enable collection of diffusely reflected or emitted light from inhomogeneous sample materials with varying compositions and surface topographies e.g. non-planar, partially transparent, or with varying surface position relative to the optical system. These types of inhomogeneous and irregularly shaped sample materials may be commonly found in natural products including foodstuffs, minerals, powders, semi-liquids, liquids, suspensions, granulated, comminuted and composite materials.
The above aims are achieved according to the present invention with an optical system showing the characteristics of claim 1.

More specifically the present invention provides an optical system capable of delivering and collecting light from a sample material. The optical system comprises a light delivery system comprising a light delivery optical element of a first numerical aperture having a first optical axis. The light delivery optical element is configured for directing light from a light source to a sample material positioned along the first optical axis. The optical system is provided with a light collection system comprising a light collection optical element of a second numerical aperture having a second optical axis. The light collection optical element is configured for collecting light diffusely reflected or emitted from a surface of the illuminated sample material and for transferring the collected light to an analysis device. According to the present invention, the light collection system comprises a light displacement optical device comprising a light displacement optical element configured for transferring at least a portion of the light diffusely reflected or emitted from a surface of the sample material to the light collection optical element. The light displacement optical device comprises a shielding element surrounding, at least partially, the light displacement optical element. The shielding element comprises a first opening, through which opening light diffusely reflected or emitted from a surface of the sample material enters the light displacement optical element, and a second opening, through which opening the diffusely reflected or emitted light entered through the first opening exits the light displacement optical element and is transferred to the light collection optical element. It should be noted that different types of sample materials may be examined by the system of the present invention, which may interact differently with light. For example, according to embodiments of the present invention, the sample materials that may be examined by the system of the present invention may include those that are configured to diffusely reflect light, such as granulated or powdered materials, or emit light, e.g. in the case of fluorescent materials such as mycotoxins in foodstuffs.

It has been found that providing an optical system according to the present invention has the advantage that the interaction of light with the sample material is significantly increased. As a result, the light collected from the sample material will be mostly diffusely reflected or emitted (e.g. in the case of a fluorescent sample material) i.e. it will mainly contain the light component that has interacted with the sample material, thereby leading to an increase in the performance of the optical system and accuracy of the results obtained from the analysis. Furthermore, with the use of a shielding element, it is ensured that light from the delivery optics or the light source that has not interacted with the sample material, i.e. directly transferred, is blocked from being collected by the light collection optics. By eliminating the direct transfer of light from the light delivery optics or the light source to the light collection optics, it is ensured that the light collected by the light collection optics is mainly composed of light that has interacted with the sample material i.e. diffusely reflected or emitted light, leading to a further increase in the accuracy of the results obtained and performance of the system. Additionally, the provision of a light displacement optical element has the advantage that the light delivery and light collection systems can be compactly positioned with respect to one another along a common axis, leading to a significant reduction in the form-factor and manufacturing cost of the optical system, which makes it ideal for use in mobile, handheld and inline analysis applications.

According to embodiments of the present invention, the light displacement optical device comprises a blocking element configured for deflecting away from the optical axis of the light delivery optical element a central part of the light directed to the sample material. For example, the blocking element may be positioned at a location between the light source and the sample material. Preferably the blocking element may be positioned between the light source and the light displacement device. According to embodiments of the present invention, the blocking element may be made from a range of materials that are opaque, chromatically neutral and heat resistant, e.g. aluminium, steel, and the like. According to embodiments of the present invention, the blocking element may be provided to be larger than the light collection aperture of the light displacement optical element.

The provision of the blocking element minimises the collection of specularly reflected light from a surface of the sample material by the light collection system. Preventing the collection of the specular reflection may be achieved, by positioning the blocking element, such that it can block away from the first optical axis the light generated by the incidence angles of the light delivery system that are close to the first optical axis. In this way, the paraxial rays of light that are close and nearly parallel to the first optical axis are prevented from reaching the sample material, thus minimising specularly reflected light from being transferred to the collection optics. The effective blocking of the paraxial rays may be achieved by dimensioning and positioning the blocking element such that it is sufficiently large to block out a solid angle of rays from the light source that would be reflected into the solid acceptance angle of the light collection system, from a particular sample surface profile. At the same time, to ensure the maximum illumination of the sample, the blocking element needs to be small enough to allow a portion of the light directed from the light delivery system to impinge upon the sample, thereby ensuring illumination of the sample material over an extended area of illumination. By providing the blocking element, the angles of the incident light and the angles of the specularly reflected light from a planar surface of the sample material, are separated from the angles of the collected light. This ensures that predominantly diffusely reflected or emitted light is collected for analysis, which improves the accuracy of the measurement for a range of applications such as absorbance or fluorescence spectroscopy.

According to embodiments of the present invention, the blocking element may be provided with a circular shape for preventing the paraxial rays from reaching a surface of the sample material. It should be noted that non-circular shapes could serve as a blocking element. For example, for certain surfaces of known curvature, the use of non-circular blocking shapes may be preferred for eliminating specularly reflected light from the light collection aperture. According to embodiments of the present invention, the optical system comprises a diffusing element, which is positioned in front of the light delivery optical element, such that the light delivered to the sample has an angular distribution greater than the cone of illumination of the light delivery optical element. The diffusing element may be made from a transparent material, e.g. glass, arranged for distributing the light delivered to the sample material by the light delivery optics over an extended area of illumination, which may be broader that the illumination area of the light delivery optics.

It has been found that the provision of the diffusing element may ensure that the light delivered to the sample has an angular distribution greater than the cone of illumination of the light delivery optical element. As a result, the illumination field at the focal position is distributed over a circular area centred on the optical axis. Another feature of the light delivered via a diffusing element is that the illumination field is continuous at other distances along the delivery optical axis, in front of and behind the focal position, so that the shadowed region normally present at these distances due to the shielding element and the collection optical system, is illuminated by some of the scattered portion of the delivered light. The light diffusing element does not change the spectral nature of the light which ultimately enters the collection optical system. Additionally, using a diffusing element to scatter the delivered light, has been found to be advantageous in generating a broad, continuous illumination field over a range of working distances. Using an infinity focussed collection optical system in combination with these light delivery elements, ensures that diffusely reflected or emitted light of a useful signal level can be collected from samples with a range of working distances, surface heights, topographies and transparencies. It has also been found that using partially diffused illumination and infinity focussed collection optics is advantageous in analysis of composite materials, because a single measurement is sufficient to collect light reflected or emitted from a large area of the sample, that comprises contributions from a representative set of the materials present in the sample. This increases the range of material types, topographies and working distances over which the system may be effectively used. For example, a transparent diffusing element may be placed in front of the light delivery optics and behind the entrance aperture of the light collection optics.

According to embodiments of the present invention, the light collection optics may be focussed at infinity. This ensures that light can be collected from any distance along the optical axis and transferred to the analysis device. Further, this configuration ensures that diffusely reflected or emitted light can be collected from a sample whose surface is positioned within the range of distances over which the delivery optical system provides a continuous field of illumination.

According to embodiments of the present invention, the first numerical aperture of the light delivery optical element is larger with respect to the second numerical aperture of the light collection optical element.

It has been found that the numerical aperture of the light delivery optical element ensures that a large portion of the emitted light from the light source e.g. a light bulb is delivered to the sample, over a large range of incidence angles to maximize the effective sample volume by maximising the internally scattered rays arriving at the collection area of the sample material surface. Combining a large numerical aperture light delivery optical element with a diffusing element, as previously described, ensures that light delivered by the delivery optics illuminates an extended area. On the other hand, a smaller aperture light collection optical element that is focused at infinity is provided with a field of view that is smaller than the area illuminated by the light delivery optical system. This ensures that light is collected from a region within the area illuminated by the light delivery optics. The numerical aperture of the light collection optics is designed so that the light scattered from the sample material can be directly transferred to the input channels of the analysis devices in an efficient manner via an optical fibre and without the need for providing additional components.

According to embodiments of the present invention, the optical system comprises a spacer arranged so that when a front surface of the spacer element is in contact with a surface of the sample material, the position of the sample material surface lies at approximately the focal distance of the light delivery system. For example, the system of the present invention may include a mechanical spacer element, which may comprise in some embodiments an openended cylinder, made from metal or polymer, which positions the sample surface at approximately the focal distance of the light delivery optics, when the front surface of the spacer element is in contact with the sample surface. The spacer may be removably attached to the instrument via fasteners or other ways, e.g. screwed or snapped on the optical system. In other embodiments, the instrument may be placed, when in use, on top of the spacer, without being attached.

According to embodiments of the present invention, the light collection optical element is positioned at a location beyond a perimeter of the light delivery optical element. In this way, it is possible to combine the delivery and collection optical systems in the same region of space, while eliminating the direct transfer of light from one optic to the other. As a result, the form-factor of the optical system of the present invention can be further reduced, while maximizing the analytical performance of the optical system.

According to the present invention, the light delivery optical element is a light reflector. For example, the reflector may be a mirror or another element having a reflective surface, which is configured for reflecting the light emitted from the light source at a certain direction over a range of incidence angles.
According to embodiments of the present invention, the light reflector may be an ellipsoidal reflector configured for transferring the light generated from a light source positioned at one of its foci to its other focal point. By providing an ellipsoidal reflector, it is ensured that the light converges and forms a continuous field of illumination, in spite of the blocking element, at sufficient distance from the light source. The dimensions of the ellipse defining the reflector profile, including the focal distances, can be adjusted to more efficiently deliver light to a sample at shorter or longer working distances.
According to another embodiment of the present invention, the light reflector may a parabolic reflector configured for transferring light generated from a light source to the sample material in the form of a collimated beam. In this case, the inclusion of a diffusing element will result in illumination of the shadowed paraxial regions at the sample surface at sufficient distance from the light source. The use of a parabolic reflector may be preferred for applications requiring a long or varying working distance to the sample of interest.
According to embodiments of the present invention, the diffusing element is a transparent glass diffuser. According to other embodiments of the invention, diffusion may be introduced into the beam being delivered to the sample by surface treatment of the reflector surface, such as abrasion to produce micrometre scaled structure, or by faceting to produce a series of offset beam sections. In another embodiment, divergence is introduced into the beam by displacement of the bulb filament from the focus of the reflector. Other embodiments can comprise a combination of some of these features to produce the desired divergence in the light delivered to the sample.
According to embodiments of the present invention, the light collection optical element is a collimator lens. The collimator lens, as previously described, has a smaller numerical aperture compared to the numerical aperture of the light delivery optical element. As a result, the light diffusely reflected or emitted from the sample material can be focused to a beam of predetermined properties that can be directly transferred to the control input channels of the analysis devices without the need for providing additional components for making the conversion.

According to the present invention, the light displacement optical element is a prism having a rhomboidal cross-sectional profile. With the use of a prism, light diffusely reflected or emitted from the sample material, e.g. at least a portion of the diffusely reflected or emitted light, may be transferred to the optical axis of the light collection optical element without altering the nature of the light collected. It should be noted, that in optical systems not falling within the scope of claim 1 other forms of light displacement optical elements may be used for transferring the light to the light collection element. For example, at least one reflective element provided with a reflective surface, such as a mirror or a set of mirrors, may be used instead of a prism. The at least one reflective element may be positioned such that it receives the light diffusely reflected or emitted from the sample material and accordingly transfers it directly, or with the use of at least a second reflective element, to the light collection optical element.
According to embodiments of the present invention, the shielding element may be provided in the form of a housing. The shielding element may be made of a material that is opaque, chromatically neutral and heat resistant. For example, the housing may be made from mechanised steel or aluminium, which may provide structural support as well as preventing the direct transfer of light. As previously discussed, by preventing the direct transfer of light from the light source to the light collection system, the analytical performance of the optical system may be significantly enhanced.

According to embodiments of the present invention, the shielding element may be provided in the form of a coating layer applied on at least one of the surfaces of the light displacement optical element. The coating layer may be made from a material having similar characteristics with those of the housing, i.e. opaque, chromatically neutral and heat resistant. For example, a metal coating layer may be applied on at least one of the surfaces of the light displacement device. The metal coating layer may be made from a number of materials such as aluminium and the like. It has been found that providing a metal coating layer as a shielding element has the advantage of reducing the form-factor and manufacturing costs of the optical system since it can be easily integrated with the light displacement optics.

According to embodiments of the present invention, the optical system comprises at least one optical fibre positioned at a location along the second optical axis and arranged for receiving the light collected by the light collection optical element, the optical fibre being configured for transferring the collected light to the input optics of an analysis device for analysing the sample material. The fibre optic may be part of the analysis device and ensures that the light collected by the light collection element is efficiently transferred to the analysis device.
According to embodiments of the present invention, the optical system may be integrated in an instrument for examining a sample material. The instrument may be configured for performing an analysis of a sample material by optical interactions, including absorption NIR spectroscopy, fluorescence spectroscopy and Raman spectroscopy.

### Brief Description of the drawings

The following drawings are provided as an example of an inventive Embodiment to further explain and describe various aspects of the invention.
Figure 1 shows an example of an optical system configuration according to embodiments of the present invention.
Figure 2 shows the optical system configuration of Figure 1 as viewed from the main axis.
Figures 3 and 4 show exemplified configurations of the optical system of figure 1 with samples of varying surface topography and transparency respectively according to the present invention.
Figures 5 and 6 show exemplified configurations of an optical system according to the present invention.
Figure 7 shows an exemplified embodiment of an optical system according to the present invention when in use with a spacer element according to embodiments of the present invention.

### Detailed Description

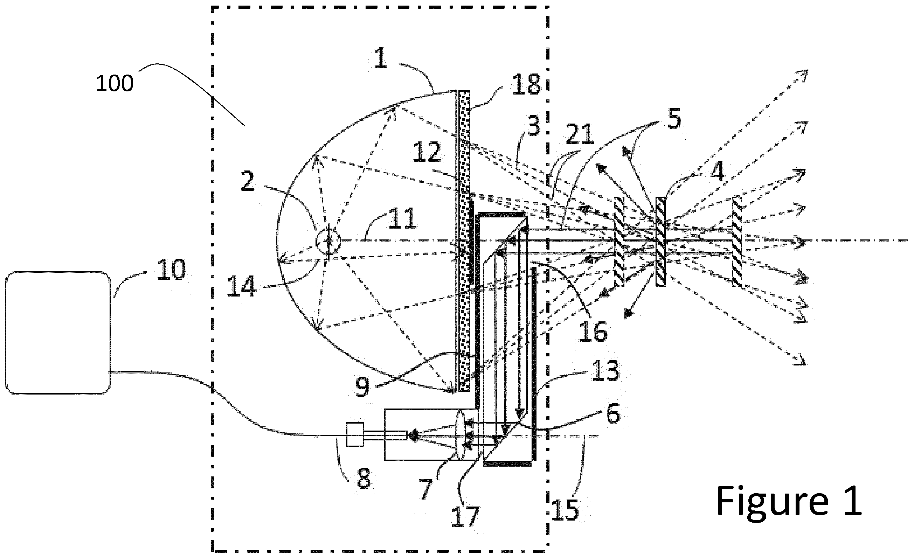

The present invention will now be elucidated by means of the exemplified embodiments presented in Figures 1 to 7, which will be described in more detail below. It should be noted that any references made to dimensions are only indicative and do not restrict the invention in any way. While this invention has been particularly shown and described with reference to certain illustrated embodiments thereof, it will be understood by those skilled in the art that various changes in form and details may be made therein without departing from the scope of the invention encompassed by the appended claims. It should be noted that the system of the present invention is capable of examining sample material with a range of characteristics and properties. For example, the optical system according to embodiments of the present invention is capable of examining sample materials with a diffusely reflective surface or a light emitting surface e.g. in the case of a fluorescent material. Therefore, the present invention should not be construed as being limited to the examination of a specific type of sample materials. Figure 1 shows an example of an optical system according to embodiments of the present invention. The optical system 100 comprises a light delivery system and a light collection system positioned along an optical axis 11. The light delivery system is provided with a light delivery optical element 1 in the form of a reflector having a desired shape e.g. having an ellipsoidal surface. As an example, the reflector cross-section may be 60mm in diameter at its widest point. The reflector being configured for directing the light emitted from a light source 2 positioned at its first focus point, to at least one sample material 4 positioned at another focal point along the optical axis 11 of the reflector 1. The second focal point may be located, as shown in Figure 1, at a position where the unscattered reflected rays 3 re-converge. Figure 1 shows an embodiment where multiple sample materials 4 are positioned at different distances from the optical system 100. As an example, the distance between the reflector's focal points may be approximately 70mm. The reflector 1 being provided with a large numerical aperture, which optimises the interaction of the light with the sample material 4, and so enhances the analytical performance of the optical system 100. A transparent diffuser 18 may be positioned in front of the light delivery optical element 1, which causes a collimated beam to scatter into a range of angles 21 causing the illumination area to become wider compared to the reflector's field of illumination. The light collection system is provided with a light collection optical element 7 having a second optical axis 15 and a narrow numerical aperture. For example, the light collection optical element 7 may be provided with an aperture having a diameter of 8mm. The small numerical aperture, when compared to the aperture of the reflector, ensures that the diffusely reflected or emitted light 5 that has been collected from the sample material 4 is focused to a range of angles matching closely the acceptance angle of the analysis device input optics. The optical system 100 comprises a light displacement system provided with a light displacement optical element 6. The light displacement optical element 6 is configured for transferring at least a portion of the light 5 diffusely reflected or emitted from the sample material 4 after illumination. Once the light 5 enters the light displacement optical element 6, it is displaced from the first optical axis 11 i.e. the optical axis of the light delivery system, to the second optical axis 15, such that light diffusely reflected or emitted 5 from the sample material 4 can be transferred to the light collection optical element 7. The light displacement optical element 6 is a rhomboid prism, which for example has a square profile side of 10mm. In another example, which does not fall within the scope of claim 1, the light displacement optical element 6 may comprise at least one element having a reflective surface e.g. a mirror, which is configured for transferring the light diffusely reflected or emitted from the sample material 4, to the second optical axis 15 so that it can be collected by the light collection optical element 7. The light displacement optical element is at least partially covered or surrounded by a shielding element 13. The shielding element 13 is configured for preventing light that has not interacted, either by reflection or emission, with the sample material 4 e.g. specular reflected light or light generated from the light source 2, to be collected by the light collection optical element 7. The shielding element 13 is provided with a first opening 16, which allows at least a portion of the light diffusely reflected or emitted from the sample material 4 to enter the light displacement optical element 6, and a second opening 17, which allows the diffusely reflected or emitted light 5 entered through the first opening 16 to exit the light displacement optical element 6 and to be transferred to the light collection optical element 7. The shielding element 13 may be in the form of an opaque housing at least partially covering the light displacement optical element 6. For example, the shielding element 13 may be positioned around the light displacement optical element 6. The shielding element 13 may be made from different parts 9, 13 that may be connected to one another so as to at least partially cover the light displacement optical element 6. The shielding element 13 may also be in the form of a coating layer, e.g. metal coating layer, applied at least partially to at least one of the surfaces of the light displacement optical element 6. The shielding element 13 may be made from a variety of materials that may yield an opaque, heat resistant and chromatically neutral structure, such as aluminium, steel and the like. The portion of the diffusely reflected or emitted light collected from the light collection optical element 7 may be transferred by means of an optical fibre 8 to the control input channels of an analysis device 10 so that the characteristics of the sample material 4 can be determined. The light delivery system may be further provided with a blocking element 12, which may be positioned at a desired location along the first optical axis 11 e.g. between the light source 2 and the sample material 4. The use of a blocking element 12 may prevent the light generated from the narrow incidence angles of the reflector 1, which are close to the first optical axis, from reaching the sample material 4. In this way, the paraxial rays 14, which are close and nearly parallel to the first optical axis 11, may be prevented from reaching the sample material 4, thus blocking specular reflection in the direction of the collection aperture 16. Reflected light 3 may be delivered to the sample material 4 from a wide range of angles around the blocking element 12, so that it converges and forms a continuous field of illumination, at a range of distances from the light source 2.

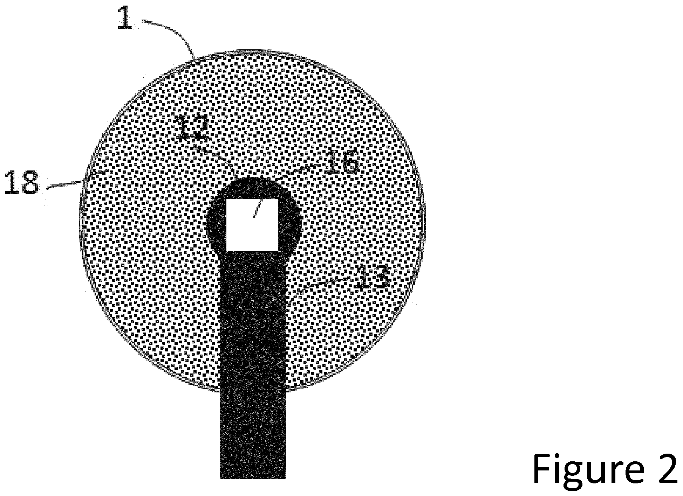

As shown in Figure 2, the blocking element 12 may be of circular shape and dimensioned such that it uniformly blocks out a solid angle of the light directed to the sample material 4, that is greater than the acceptance angle of the light collection element 7, which acceptance angle may be limited by the first opening 16 of the shielding element 13. At the same time, to ensure the maximum illumination of the sample material 4, the blocking element 12 needs to be small enough to allow a portion of the light 3 directed from the light delivery system to reach the sample material 4. As an example, the blocking element may have a diameter of 18 mm. By providing the blocking element 12 the angles of the specularly reflected light from a surface of the sample material 4, are separated from the collected diffusely reflected or emitted light. This ensures that predominantly only diffusely reflected or emitted light is collected for analysis, which improves the accuracy of the measurement and further allows for the light delivery and light collection systems to be positioned along the same axis. It should be noted, that although the figures show a blocking element 12 having a circular shape, non-circular shapes may also be used, especially in the case of a sample material having a surface or surfaces of known curvature.

The range of angles of the illumination light provided by the diffusing element 18 ensure that the light delivered to the sample material 4 forms an extended illumination area, which may be 15mm in diameter, at its minimum size. The spread of the illumination light is such that it illuminates the axial region in front of the light delivery optics, impinging on the shadow produced by the blocking element 12 and the shielding 13 of the light displacement optical element 6, in the region immediately in front of the light delivery optics. This ensures that the illumination light field is continuous in the axial region, over a range of distances from the light source.

Because the illumination field is continuous over a range of distances, and because the collection optics are infinity focussed the sample material 4 may be positioned at different locations along the first optical axis 11. For example, as shown in Figure 1, the sample material 4 may be positioned before or after the focus of the reflector 1. In this case, illumination at the sample surface may be more extended than at the focal plane.

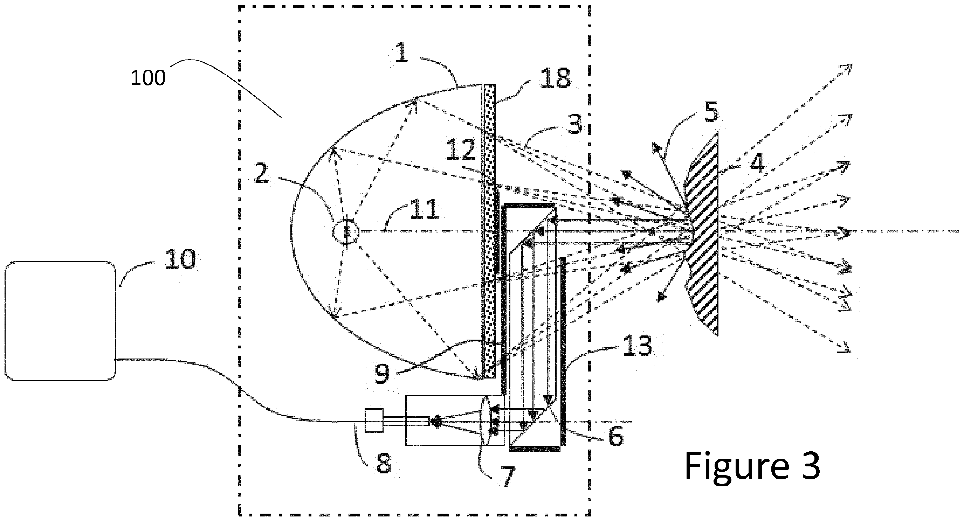

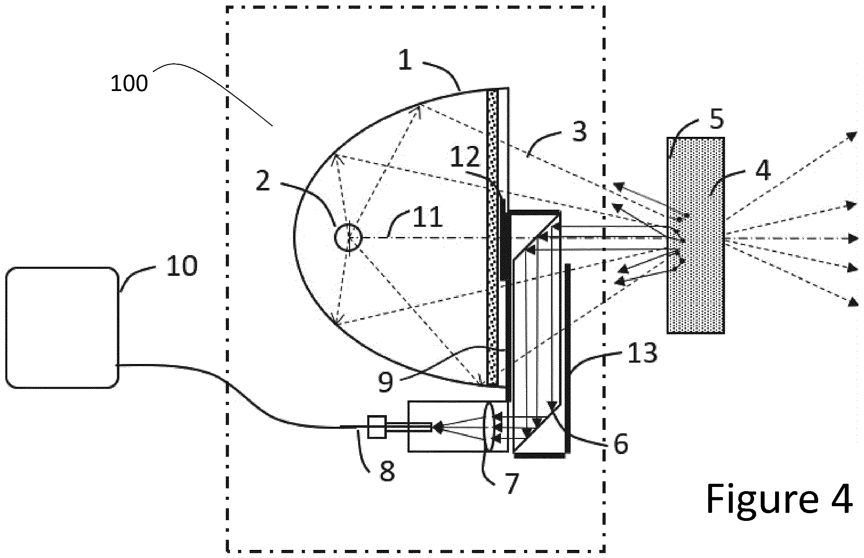

Depending on the application, the sample material surface may vary. For example, as shown in Figure 3, optical system 100 of the present invention may be used with a sample material 4 having a sample surface of varying topography, rather than a planar surface e.g. surfaces of food products. In other applications, the optical system 100 may be used to examine sample materials 4 that are semi-transparent and scattering, such as liquid suspensions, or slurries, as shown in figure 4.

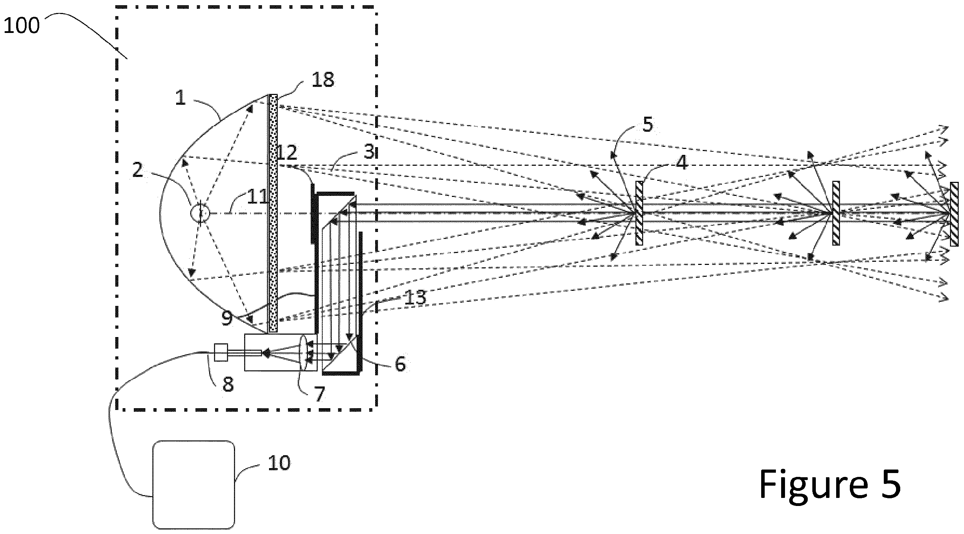

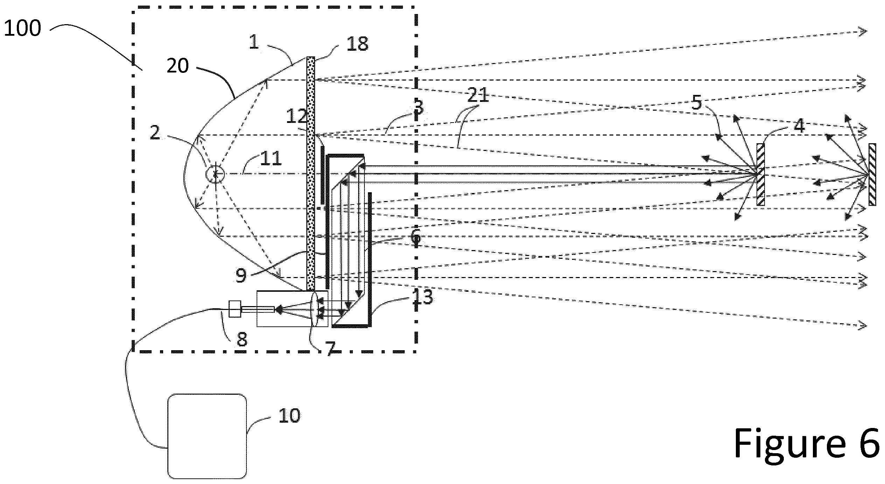

For certain applications requiring examination of a sample material 4 being provided at a long distance, or a greater range of working distances, the optical system 100 may be provided with a reflector of longer focal distance or of a different reflector type. Figure 5 illustrates an elliptical reflector of significantly longer focal length, which produces an illumination field that is continuous over a greater range of working distances than the one produced by the reflector of previous embodiments shown in figures 1 to 3, relative to the diameter of the light delivery system. It should be noted that other types of reflectors may be used to increase the illumination field or working distances, thus the present invention is not by any means limited to the use of an ellipsoidal reflector. For example, a parabolic reflector may be used, as shown in Figure 6. A parabolic reflector 20 is configured for transferring light generated from a light source 2 to the sample material 4 in the form of a collimated beam. In the case of a perfect parabolic reflector the shadow of the blocking element 12 and shielding element 13 will be present in the illumination field at all distances in front of the light delivery optics. A range of angles in the beam 21 is necessary to generate a continuous illumination field at any distance. This design is suitable for assessing samples at long working distances.

According to embodiments of the present invention, the optical system 100 of the present invention may be used in an instrument capable of examining a sample material 4. The instrument may be configured for performing an analysis of a sample material 4 by optical interactions, e.g. collecting the diffusely reflected or emitted light.

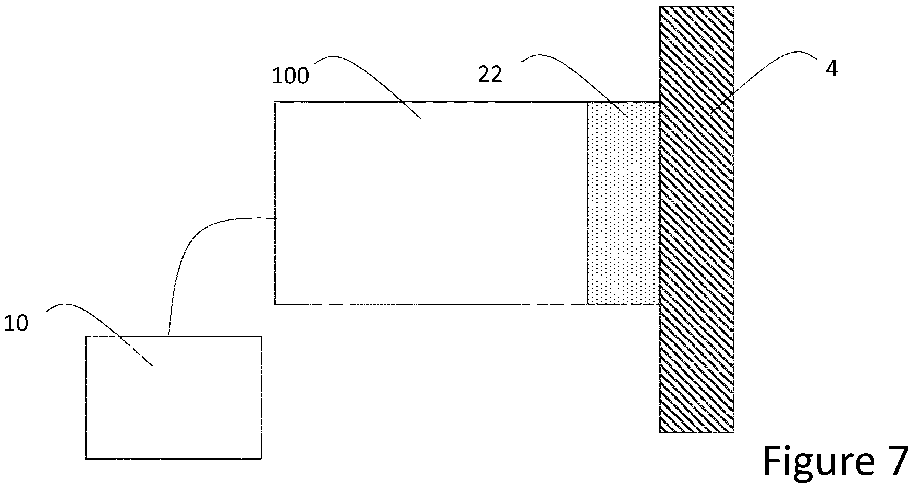

According to embodiments of the present invention, the optical system 100 may be provided with a spacer element 22, an example of which is shown in Figure 7. The spacer element 22 is provided with an opening to allow the light transferred by the light delivery optics to the sample material 4, to reach the sample material. For example, a cylindrical spacer element 22 may be positioned at the front-end of the optical system 100 to position the surface of the sample material 4 at approximately the desired focal distance, when in contact with the spacer element. It should be noted that the spacer element 22 may be of any desirable shape and dimesons. Depending on the working distance of the optical system 100, spacers of different heights may be provided. Moreover, the height of the spacer may be adjustable to accommodate different working distances. The spacer element 22 may be removably secured to the optical system 100 by securing means, so that it can be replaced or removed quickly. For example, a set of spacer elements 22 may be provided with different heights, to allow for the sample material 4 to be positioned at different working distances. Furthermore, a height extendable spacer element may be provided to allow for the positioning of the sample material at different working distances. The spacer element 22 may be connectable to the optical system 100 via a screw and thread configuration, and/or fasteners e.g. screws, bolts, and the like, and/or a magnetic connection configuration, and/or a press-fitted connection configuration, or any other desirable way. Furthermore, the spacer element 22 may be used with the optical system 100 by simple placing the optical system 100 on top of the spacer element 22, which may not necessitate a connection between the two parts.

### List of reference numerals

- 1: Light delivery optical element
- 2: Light source
- 3: Reflected light
- 4: Sample material
- 5: Light diffusely reflected or emitted from sample
- 6: Light displacement optical element
- 7: Light collection optical element
- 8: Optical fibre
- 9: Part of the shielding element
- 10: Analysis device
- 11: First optical axis
- 12: Blocking element
- 13: Shielding element
- 14: Paraxial rays
- 15: Second optical axis
- 16: First opening
- 17: Second opening
- 18: Diffusing element
- 20: Parabolic reflector
- 21: Divergent rays
- 22: Spacer element
- 100: Optical system

## Claims

1. An optical system (100) comprising:
a light source (11);
a light delivery system comprising
a reflector (1) of a first numerical aperture having a first optical axis (11), the reflector (1) being configured for directing light (3) emitted from the light source (2) to a sample material (4) positioned along the first optical axis (11);
a light collection system comprising
a light collection optical element (7) of a second numerical aperture having a second optical axis (15), the light collection optical element (15) being configured for collecting light (5) diffusely reflected or emitted from a surface of the illuminated sample material (4) and for transferring the collected light to an analysis device (10); and
a light displacement optical device positioned between the light source (2) and the sample material (4) comprising a light displacement optical element (6) configured for transferring at least a portion of the light (5) diffusely reflected or emitted from the surface of the sample material (4) to the light collection optical element (7);
wherein the light displacement optical device comprises a shielding element (13) surrounding, at least partially, the light displacement optical element (6), the shielding element (13) comprising at least a first opening (16), through which opening (6) light diffusely reflected or emitted (5) from the surface of the sample material (4) enters the light displacement optical element (6), and at least a second opening (17), through which second opening (17) the diffusely reflected or emitted light entered through the first opening exits the light displacement optical element (6) and is transferred to the light collection optical element (7), **characterized in that** the light displacement optical element is a prism having a rhomboid shape.

2. The optical system (100) of claim 1, wherein the light displacement optical device comprises a blocking element (12) configured for deflecting away from the optical axis of the light delivering optical element (1) a central part of the light (14) directed to the sample material (4).

3. The optical system (100) of claim 2, wherein the blocking element (12) has a circular shape.

4. The optical system (100) according to claim 1 or 2, wherein the light delivery system comprises a diffusing element (18), which is positioned in front of the reflector (1) such that the light delivered to the sample material (4) has an angular distribution greater than the cone of illumination of the reflector (1).

5. The optical system (100) according to any one of the preceding claims, wherein the optical system (100) comprises a spacer (22) arranged, when a front surface of the spacer element comes in contact with the surface of the sample material (4), for positioning the sample material (4) at approximately the focal distance of the light delivery system.

6. The optical system (100) of any one of the preceding claims, wherein the first numerical aperture of the reflector (1) is larger with respect to the second numerical aperture of the light collection optical element (7).

7. The optical system (100) of any one of the preceding claims, wherein the light collection optical element (7) is positioned at a location beyond a perimeter of the reflector (1).

8. The optical system (100) of any one of the preceding claims, wherein the reflector (1) is an ellipsoid reflector configured for transferring the light generated from the light source (2) positioned at one of its foci to its other focal point.

9. The optical system (100) of any one of claims 1 to 7, wherein the reflector (1) is a parabolic reflector configured for transferring light generated from the light source (2) to the sample material (4) in the form of a collimated beam.

10. The optical system (100) of any one of the preceding claims, wherein the shielding element (13) is in the form of a housing made of an opaque material.

11. The optical system (100) of any one of claims 1 to 9, wherein the shielding element (13) is in the form of an opaque coating layer applied on at least one of the surfaces of the light displacement optical element (6) in such a way so as to form the at least first and second openings (16,17).

12. The optical system (100) of any one of the preceding claims, wherein the optical system (100) comprises at least one optical fibre (8) positioned at a location along the second optical axis (15) and arranged for receiving the light collected by the light collection optical element (7), the optical fibre (8) being configured for transferring the collected light to the input optics of an analysis device (10) for analysing the sample material.

13. An instrument configured to perform NIR spectroscopic, fluorescence spectroscopic or Raman spectroscopic examination of a sample material, wherein the instrument comprises an optical system (100) according to any one of the claims 1 to 12.

14. Use of the instrument according to claim 13 for performing NIR spectroscopy Hear to examine a sample material.

## Patentansprüche

1. Optisches System (100), umfassend:
eine Lichtquelle (11);
ein Lichtzuführsystem, das
einen Reflektor (1) mit einer ersten numerischen Apertur, die eine erste optische Achse (11) aufweist, umfasst, wobei der Reflektor (1) konfiguriert ist, Licht (3), das von der Lichtquelle (2) emittiert wird, auf ein Probenmaterial (4), das entlang der ersten optischen Achse (11) positioniert ist, zu lenken;
ein Lichtsammelsystem, das
ein optisches Lichtsammelelement (7) mit einer zweiten numerischen Apertur, die eine zweite optische Achse (15) aufweist, umfasst, wobei das optische Lichtsammelelement (15) zum Sammeln von Licht (5), das von einer Oberfläche des beleuchteten Probenmaterials (4) diffus reflektiert oder emittiert wird, und zum Übertragen des gesammelten Lichts zu einer Analysevorrichtung (10) konfiguriert ist; und
eine optische Lichtversatzvorrichtung, die zwischen der Lichtquelle (2) und dem Probenmaterial (4) positioniert ist, umfassend
ein optisches Lichtversatzelement (6), das zum Übertragen zumindest eines Anteils des Lichts (5), das von der Oberfläche des Probenmaterials (4) diffus reflektiert oder emittiert wird, zum optischen Lichtsammelelement (7) konfiguriert ist;
wobei die optische Lichtversatzvorrichtung ein Abschirmelement (13) umfasst, das das optische Lichtversatzelement (6) zumindest teilweise umgibt, wobei das Abschirmelement (13) mindestens eine erste Öffnung (16), wobei Licht (5), das von der Oberfläche des Probenmaterials (4) diffus reflektiert oder emittiert wird, durch diese Öffnung (16) in das optische Lichtversatzelement (6) eintritt, und mindestens eine zweite Öffnung (17), wobei das diffus reflektierte oder emittierte Licht, das durch die erste Öffnung eingetreten ist, durch diese zweite Öffnung (17) aus dem optischen Lichtversatzelement (6) austritt und zum optischen Lichtsammelelement (7) übertragen wird, umfasst,
**dadurch gekennzeichnet, dass** das optische Lichtversatzelement ein Prisma ist, das eine Rhombusform aufweist.

2. Optisches System (100) nach Anspruch 1, wobei die optische Lichtversatzvorrichtung ein Sperrelement (12) umfasst, das konfiguriert ist, einen mittigen Anteil des Lichts (14), das auf das Probenmaterial (4) gelenkt wird, von der optischen Achse des optischen Lichtzuführelements (1) abzulenken.

3. Optisches System (100) nach Anspruch 2, wobei das Sperrelement (12) kreisförmig ist.

4. Optisches System (100) nach Anspruch 1 oder 2, wobei das Lichtzuführsystem ein Streuelement (18) umfasst, das vor dem Reflektor (1) positioniert ist, derart, dass das Licht, das dem Probenmaterial (4) zugeführt wird, eine Winkelverteilung aufweist, die größer als der Beleuchtungskegel des Reflektors (1) ist.

5. Optisches System (100) nach einem der vorhergehenden Ansprüche, wobei das optische System (100) ein Abstandselement (22) umfasst, das, wenn eine vordere Oberfläche des Abstandselements mit der Oberfläche des Probenmaterials (4) in Kontakt gelangt, zum Positionieren des Probenmaterials (4) näherungsweise bei der Brennweite des Lichtzuführsystems ausgelegt ist.

6. Optisches System (100) nach einem der vorhergehenden Ansprüche, wobei die erste numerische Apertur des Reflektors (1) in Bezug auf die zweite numerische Apertur des optischen Lichtsammelelements (7) größer ist.

7. Optisches System (100) nach einem der vorhergehenden Ansprüche, wobei das optische Lichtsammelelement (7) an einem Ort jenseits eines Umkreises des Reflektors (1) positioniert ist.

8. Optisches System (100) nach einem der vorhergehenden Ansprüche, wobei der Reflektor (1) ein elliptischer Reflektor ist, der konfiguriert ist, das Licht, das von der Lichtquelle (2) erzeugt wird, die an einem seiner Brennpunkte positioniert ist, an seinen anderen Brennpunkt zu übertragen.

9. Optisches System (100) nach einem der Ansprüche 1 bis 7, wobei der Reflektor (1) ein Parabolreflektor ist, der konfiguriert ist, das Licht, das von der Lichtquelle (2) erzeugt wird, zum Probenmaterial (4) in der Form eines kollimierten Strahls zu übertragen.

10. Optisches System (100) nach einem der vorhergehenden Ansprüche, wobei das Abschirmelement (13) in der Form eines Gehäuses, das aus einem lichtundurchlässigen Material hergestellt ist, vorliegt.

11. Optisches System (100) nach einem der Ansprüche 1 bis 9, wobei das Abschirmelement (13) in der Form einer lichtundurchlässigen Beschichtungsschicht vorliegt, die auf mindestens eine der Oberflächen des optischen Lichtversatzelements (6) auf eine derartige Weise aufgebracht ist, dass zumindest die erste und die zweite Öffnung (16, 17) gebildet werden.

12. Optisches System (100) nach einem der vorhergehenden Ansprüche, wobei das optische System (100) mindestens eine Lichtleiterfaser (8) umfasst, die an einem Ort entlang der zweiten optischen Achse (15) positioniert ist und zum Empfangen des Lichts, das durch das optische Lichtsammelelement (7) gesammelt wird, ausgelegt ist, wobei die Lichtleiterfaser (8) zum Übertragen des gesammelten Lichts zur Eingangsoptik einer Analysevorrichtung (10) zum Analysieren des Probenmaterials konfiguriert ist.

13. Instrument, das konfiguriert ist, eine NIR-spektroskopische, fluoreszenzspektroskopische oder Raman-spektroskopische Untersuchung eines Probenmaterials durchzuführen, wobei das Instrument ein optisches System (100) nach einem der Ansprüche 1 bis 12 umfasst.

14. Verwendung des Instruments nach Anspruch 13 zum Durchführen von NIR-Spektroskopie, um ein Probenmaterial zu untersuchen.

## Revendications

1. Système optique (100) comprenant :
une source de lumière (11) ;
un système de délivrance de lumière comprenant
un réflecteur (1) à une première ouverture numérique ayant un premier axe optique (11), le réflecteur (1) étant configuré pour orienter la lumière (3) émise par la source de lumière (2) vers un matériau échantillon (4) positionné le long du premier axe optique (11) ;
un système de collecte de lumière comprenant
un élément optique de collecte de lumière (7) à seconde ouverture numérique ayant un second axe optique (15), l'élément optique de collecte de lumière (15) étant configuré pour collecter la lumière (5) réfléchie ou émise de manière diffuse par une surface du matériau échantillon éclairé (4) et pour transférer la lumière collectée vers un dispositif d'analyse (10) ; et
un dispositif optique de déplacement de lumière positionné entre la source de lumière (2) et le matériau échantillon (4) comprenant un élément optique de déplacement de lumière (6) configuré pour transférer au moins une partie de la lumière (5) réfléchie ou émise de manière diffuse par la surface du matériau échantillon (4) vers l'élément optique de collecte de lumière (7) ;
dans lequel le dispositif optique de déplacement de lumière comprend un élément de protection (13) qui entoure, au moins partiellement, l'élément optique de déplacement de lumière (6), l'élément de protection (13) comprenant au moins une première ouverture (16), par laquelle la lumière d'ouverture réfléchie ou émise (5) de manière diffuse par la surface du matériau échantillon (4) pénètre dans l'élément optique de déplacement de lumière (6), et au moins une seconde ouverture (17), par laquelle la lumière réfléchie ou émise de manière diffuse qui a pénétré dans la première ouverture sort de l'élément optique de déplacement de lumière (6) et est transférée vers l'élément optique de collecte de lumière (7), **caractérisé en ce que** l'élément optique de déplacement de lumière est un prisme ayant une forme rhomboïde.

2. Système optique (100) selon la revendication 1, dans lequel le dispositif optique de déplacement de lumière comprend un élément de blocage (12) configuré pour dévier de l'axe optique de l'élément optique de délivrance de lumière (1) une partie centrale de la lumière (14) orientée vers le matériau échantillon (4).

3. Système optique (100) selon la revendication 2, dans lequel l'élément de blocage (12) possède une forme circulaire.

4. Système optique (100) selon la revendication 1 ou 2, dans lequel le système de délivrance de lumière comprend un élément de diffusion (18), qui est positionné en face du réflecteur (1) de sorte que la lumière délivrée au matériau échantillon (4) possède une répartition angulaire supérieure au cône d'éclairage du réflecteur (1).

5. Système optique (100) selon l'une quelconque des revendications précédentes, dans lequel le système optique (100) comprend un espaceur (22) prévu, lorsqu'une surface avant de l'élément d'espacement entre en contact avec la surface du matériau échantillon (4), pour positionner le matériau échantillon (4) approximativement à la distance focale du système de délivrance de lumière.

6. Système optique (100) selon l'une quelconque des revendications précédentes, dans lequel la première ouverture numérique du réflecteur (1) est plus grande que la seconde ouverture numérique de l'élément optique de collecte de lumière (7).

7. Système optique (100) selon l'une quelconque des revendications précédentes, dans lequel l'élément optique de collecte de lumière (7) est positionné à un emplacement situé au-delà d'un périmètre du réflecteur (1).

8. Système optique (100) selon l'une quelconque des revendications précédentes, dans lequel le réflecteur (1) est un réflecteur ellipsoïde configuré pour transférer la lumière générée par la source de lumière (2) positionnée au niveau de l'un de ses points focaux vers son autre point focal.

9. Système optique (100) selon l'une quelconque des revendications 1 à 7, dans lequel le réflecteur (1) est un réflecteur parabolique configuré pour transférer la lumière générée par la source de lumière (2) vers le matériau échantillon (4) sous la forme d'un faisceau collimaté.

10. Système optique (100) selon l'une quelconque des revendications précédentes, dans lequel l'élément de protection (13) est sous la forme d'un boîtier composé d'un matériau opaque.

11. Système optique (100) selon l'une quelconque des revendications 1 à 9, dans lequel l'élément de protection (13) est sous la forme d'une couche de revêtement opaque appliquée sur au moins l'une des surfaces de l'élément optique de déplacement de lumière (6) de façon à former les au moins première et seconde ouvertures (16, 17).

12. Système optique (100) selon l'une quelconque des revendications précédentes, dans lequel le système optique (100) comprend au moins une fibre optique (8) positionnée à un emplacement le long du second axe optique (15) et prévue pour recevoir la lumière collectée par l'élément optique de collecte de lumière (7), la fibre optique (8) étant configurée pour transférer la lumière collectée vers l'optique d'entrée d'un dispositif d'analyse (10) destiné à analyser le matériau échantillon.

13. Instrument configuré pour effectuer un examen spectroscopique en proche infrarouge, spectroscopique par fluorescence ou spectroscopique de Raman d'un matériau échantillon, dans lequel l'instrument comprend un système optique (100) selon l'une quelconque des revendications 1 à 12.

14. Utilisation de l'instrument selon la revendication 13 pour effectuer une spectroscopie en proche infrarouge afin d'examiner un matériau échantillon.
